# EUROPEAN PATENT APPLICATION

(11) **EP 4 293 933 A1**
(43) Date of publication of application: **20.12.2023**
(21) Application number: 23178726.8
(22) Date of filing: 12.06.2023
(51) Int. Cl.: H04B 10/077, H04B 10/2507, H04B 10/69, H04J 3/00, H04Q 11/00

(54) **METHODS, DEVICES AND APPARATUSES FOR OPTICAL COMMUNICATION, AND COMPUTER READABLE MEDIUM**

(30) Priority: 13.06.2022 CN 202210667065
(71) Applicant: Nokia Solutions and Networks Oy, 02610 Espoo (FI)
(72) Inventor: ZHANG, Dong Xu, Shanghai, 200129 (CN); YAO, Shuang, Zhengzhou, 450000 (CN); YE, Chen Hui, Shanghai, 200030 (CN)
(74) Representative: DREISS Patentanwälte PartG mbB

(57) **Abstract**

Embodiments of the present disclosure relate to methods, devices and apparatuses for optical communication, and a computer readable medium. An embodiment of the method comprises determining, at an optical line terminal, a channel characteristic of a channel from an optical network unit to the optical line terminal; determining, based on the channel characteristic, a preamble property for a transmission from the optical network unit to the optical line terminal, the preamble property at least partially compensating for transmission distortion caused by the channel characteristic; transmitting preamble information to the optical network unit, the preamble information being for generating a preamble having the preamble property; and receiving the preamble having the preamble property from the optical network unit. In this way, a training speed of an equalizer of the optical line terminal can be improved, and preamble overhead can be reduced.

## Description

### FIELD

The present disclosure generally relates to the field of optical communication, and in particular, to methods, devices and apparatuses for optical communication, and a computer readable medium.

### BACKGROUND

For uplink data transmission of a high-speed passive optical network (PON) system, an equalizer based on adaptive digital signal processing (DSP) will be used for an optical line terminal (OLT), to precisely recover signals from different optical network units (ONUs). These optical network units have various channel conditions (for example, wavelengths, component bandwidths, and fiber lengths).

In order to adaptively tune or train a coefficient of the equalizer, a preamble sequence known by the OLT is attached before each burst from the ONU. However, preamble time makes up an essential part of physical layer overhead.

### SUMMARY

In general, example embodiments of the present disclosure relate to a technical solution for optimizing a preamble configuration.

In a first aspect of the present disclosure, there is provided a method for optical communication. The method comprises: determining, at an optical line terminal, a channel characteristic of a channel from an optical network unit to the optical line terminal; determining, based on the channel characteristic, a preamble property for a transmission from the optical network unit to the optical line terminal, where the preamble property at least partially compensating for transmission distortion caused by the channel characteristic; transmitting, to the optical network unit, preamble information, the preamble information being for generating a preamble having the preamble property; and receiving, from the optical network unit, the preamble having the preamble property.

In a second aspect of the present disclosure, there is provided a method for optical communication. The method comprises: receiving, at an optical network unit and from an optical line terminal, preamble information, the preamble information being for generating a preamble having a preamble property, the preamble property being determined based on a channel characteristic of a channel from the optical network unit to the optical line terminal, the preamble property at least partially compensating for transmission distortion caused by the channel characteristic; generating, based on the preamble information, the preamble for a transmission from the optical network unit to the optical line terminal; and transmitting, to the optical line terminal, the preamble having the preamble property.

In a third aspect of the present disclosure, there is provided a device for optical communication. The device comprises: a processor; and a transceiver communicatively coupled to the processor; the processor being configured to cause the device to perform the method of the first aspect.

In a fourth aspect of the present disclosure, there is provided a device for optical communication. The device comprises: a processor; and a transceiver communicatively coupled to the processor; the processor being configured to cause the device to perform the method of the second aspect.

In a fifth aspect of the present disclosure, there is provided an apparatus for optical communication. The apparatus comprises: means for determining a channel characteristic of a channel from an optical network unit to an optical line terminal; means for determining, based on the channel characteristic, a preamble property for a transmission from the optical network unit to the optical line terminal, the preamble property at least partially compensating for transmission distortion caused by the channel characteristic; means for transmitting, to the optical network unit, preamble information, the preamble information being for generating a preamble having the preamble property; and means for receiving, from the optical network unit, the preamble having the preamble property.

In a sixth aspect of the present disclosure, there is provided an apparatus for optical communication. The apparatus comprises: means for receiving, from an optical line terminal, preamble information, the preamble information being for generating a preamble having a preamble property, the preamble property being determined based on a channel characteristic of a channel from the optical network unit to the optical line terminal, the preamble property at least partially compensating for transmission distortion caused by the channel characteristic; means for generating, based on the preamble information, the preamble for a transmission from the optical network unit to the optical line terminal; and means for transmitting, to the optical line terminal, the preamble having the preamble property.

In a seventh aspect of the present disclosure, there is provided a computer readable medium storing instructions thereon. The instructions, when executed by at least one processing unit, causing the at least one processing unit to be configured to perform the method according to the first aspect.

In an eighth aspect of the present disclosure, there is provided a computer readable medium storing instructions thereon. The instructions, when executed by at least one processing unit, causing the at least one processing unit to be configured to perform the method according to the second aspect.

It should be understood that the content described in the summary of the invention is neither intended to limit key or important features of examples of the present disclosure, nor intended to limit the scope of the present disclosure. Other features of the present disclosure will be comprehensible through the following description.

### BRIEF DESCRIPTION OF THE DRAWINGS

Fig. 1 shows a block diagram of an example communication system in which embodiments of the present disclosure may be implemented;
Fig. 2 shows a schematic diagram of interaction of a method for optical communication according to some embodiments of the present disclosure;
Fig. 3 shows a schematic diagram of a preamble generation algorithm model according to some embodiments of the present disclosure;
Fig. 4 shows a schematic diagram of an activation flow of an optical network unit (ONU) according to some embodiments of the present disclosure;
Fig. 5 shows a schematic diagram of a passive optical network (PON) system according to some embodiments of the present disclosure;
Fig. 6 shows a schematic diagram of a principle of a method for optical communication according to some embodiments of the present disclosure;
Fig. 7 shows an illustrative schematic diagram of using a dedicated wavelength at an activation stage of an ONU in a high-speed PON system;
Fig. 8 shows a schematic diagram of interaction between an optical line terminal (OLT) and an ONU according to some embodiments of the present disclosure;
Fig. 9 shows a schematic diagram of interaction between an OLT and an ONU according to some other embodiments of the present disclosure;
Fig. 10 shows an illustrative schematic diagram of physical layer overhead in a time division multiplexing (TDM)-PON uplink scenario according to some embodiments of the present disclosure;
Fig. 11 shows a schematic comparison diagram of a convergence speed of training of an equalizer according to embodiments of the present disclosure and a traditional solution;
Fig. 12 shows a schematic diagram of a process for optical communication according to some embodiments of the present disclosure;
Fig. 13 shows a schematic diagram of a process for optical communication according to some other embodiments of the present disclosure;
Fig. 14 shows a simplified block diagram of an electronic device that is suitable for implementing embodiments of the present disclosure; and
Fig. 15 shows a schematic diagram of a computer readable medium suitable for implementing embodiments of the present disclosure.

In all the drawings, the same or similar reference numerals denote the same or similar elements.

### DETAILED DESCRIPTION

The principle and spirit of the present disclosure will be described below with reference to several example embodiments shown in the accompanying drawings. It should be understood that the specific embodiments are described only to enable those skilled in the art to better understand and implement the present disclosure, and are not intended to limit the scope of the present disclosure in any way.

The terms "include" and "comprise" used herein and similar terms should be understood as open inclusion, that is, "including but not limited to" and "comprising but not limited to". The term "based on" should be understood as "at least partly based on." The terms "an embodiment" or "the embodiment" should be understood as "at least one embodiment." The terms "first", "second", etc. may refer to different or the same objects. Other explicit and implicit definitions may be included below.

As used herein, the term "determine" covers a wide variety of actions. For example, "determine" may include operating, computing, processing, exporting, inquiry, looking up (for example, looking up in a table, a database, or another data structure), finding, etc. In addition, "determine" may include receiving (for example, receiving information), accessing (for example, accessing data in a memory), etc. In addition, "determine" may include parsing, choosing, selecting, establishing, etc.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as an OLT or other computing devices, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit or a similar integrated circuit in the OLT or other computing devices.

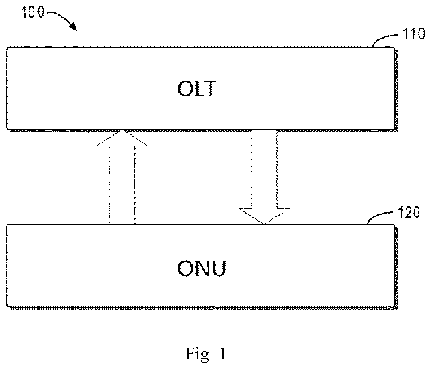

Fig. 1 shows a block diagram of an example communication system in which embodiments of the present disclosure may be implemented. As shown in Fig. 1, the communication system 100 comprises an OLT 110 and an optical network unit (ONU) 120. The OLT 110 and the ONU 120 may communicate with each other via a communication channel. Data may be transmitted through an uplink from the ONU 120 to the OLT 110 or a downlink from the OLT 110 to the ONU 120. It should be understood that the number of the OLT 110 and the ONU shown in Fig. 1 is provided for illustration. The communication system 100 may include any suitable number of OLT 110 and ONU 120. In some embodiments, the communication channel between the OLT 110 and the ONU 120 may include an optical fiber communication channel. In some other embodiments, the communication channel between the OLT 110 and the ONU 120 may also be any wired or wireless channel in other forms. In some embodiments, the communication system 100 may be a part of a passive optical network (PON). In such embodiments, on a low-speed activation wavelength, the OLT 110 first registers the ONU 120, and then designates a long preamble for initial equalizer training on a high-speed wavelength channel. After the equalizer accomplished its training for the first time, shorter preambles can be used for the particular ONU 120. Preamble time makes up an essential part of physical layer overhead. Therefore, reducing preamble overhead is highly desirable and beneficial to improve transmission efficiency.

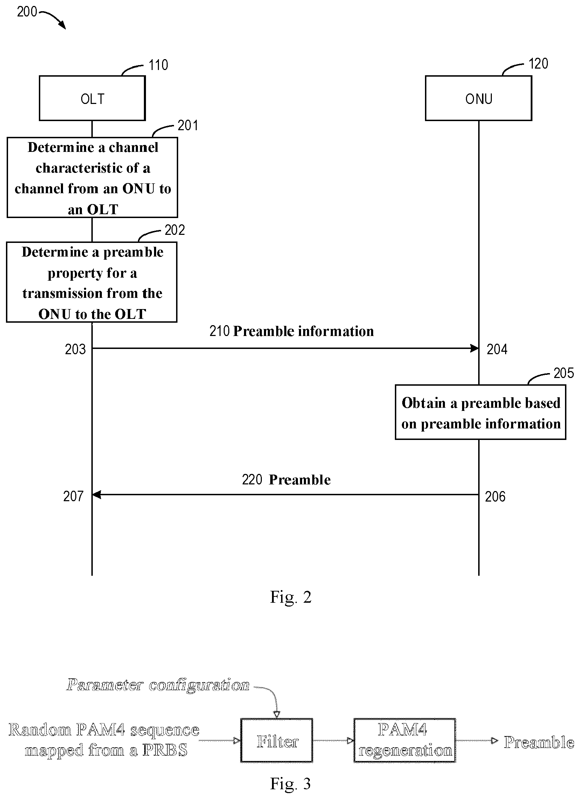

In order to generally reduce the preamble overhead and improve operation efficiency of communication systems such as the PON, the embodiments of the present disclosure provide a technical solution for improving a preamble configuration. The embodiments of the present disclosure will be described in detail below based on Figs. 2-13.

Fig. 2 shows a schematic diagram of interaction of a method for optical communication according to some embodiments of the present disclosure.

As shown in Fig. 2, a process 200 of interaction between an optical line terminal (OLT) 110 and an optical network unit (ONU) 120 according to the embodiments of the present disclosure is as below:

The optical line terminal 110 determines (201) a channel characteristic of a channel from the optical network unit 120 to the optical line terminal 110. As used herein, the channel characteristic may refer to any channel characteristic related to signal transmission from the optical network unit 120 to the optical line terminal 110, which comprises a channel medium characteristic (such as a fiber characteristic) from the optical network unit 120 to the optical line terminal 110, properties of a signal transmission device and a signal reception device, such as bandwidths of the transmission device and the reception device, etc. In some embodiments, the channel characteristic may comprise a channel characteristic related to the optical network unit 120, and the channel characteristic related to the optical network unit 120 is obtained by the optical line terminal 110 in an activation process of the optical network unit 120. For example, a characteristic of the optical network unit 120, a fiber length, a hardware version, a modulation format, modulator bandwidth, and other calibration data, such as a driver frequency response, a modulator S-parameter and other module characteristic data.

Generally speaking, the optical line terminal 110 may determine the above channel characteristic in any suitable way. For example, the optical line terminal 110 may store the channel characteristic measured in advance. For another example, the optical line terminal 110 may transmit a request to the optical network unit 120, to ask both parties to measure the channel characteristic. For further example, the optical line terminal 110 may obtain the channel characteristic associated with the optical network unit 120 at an activation stage of the optical network unit 120. Such embodiments will be further described in detail below.

Continuing with reference to Fig. 2, based on the channel characteristic determined, the optical line terminal 110 may determine (202) a preamble property for a transmission from the optical network unit 120 to the optical line terminal 110. The preamble property may at least partially compensate for transmission distortion caused by the channel characteristic. It should be noted that the preamble property determined by the optical line terminal 110 may be any suitable preamble property as follows, which may eliminate or partially eliminate distortion of the preamble after channel transmission. In some embodiments, such preamble property may be embodied, for example, by a symbol transition probability and a spectral shaping configuration of a preamble sequence. However, it is to be understood that any other preamble properties that may be used to embody that a preamble resists influence of channel transmission are also possible.

Then, the optical line terminal 110 transmits (203) preamble information 210 to the optical network unit 120. The preamble information 210 may be used for generating a preamble 220 having the preamble property. It should be noted that the preamble information 210 may be in any suitable form, as long as the optical network unit 120 may generate the preamble 220 having the above preamble property based on the preamble information 210. For example, the preamble information 210 may be an indication directly indicating to the optical network unit 120 what type of sequence the preamble 220 is, such as the preamble sequence itself. For another example, the preamble information 210 may be some configuration parameters for generating the preamble 220, and the optical network unit 120 may use the configuration parameters to generate the preamble 220.

Accordingly, the optical network unit 120 may receive (204) the preamble information 210. After receiving the preamble information 210, the optical network unit 120 obtains (205), based on the preamble information 210, the preamble 220 transmitted from the optical network unit 120 to the optical line terminal 110. After obtaining the preamble 220, the optical network unit 120 may transmit (206), to the optical line terminal 110, the preamble 220 having the above preamble property. Accordingly, the optical line terminal 110 will receive (207) the preamble 220.

ITU-T G.9804.2/3 (G.HSP) is a latest 50G PON standard specification, specifies using a pseudo random binary sequence (PRBS) as a training sequence. PRBS type preamble patterns have features of direct current (DC) balance, flat power spectrum, and a symbol transition probability like random data. However, it could be far from the best choice in terms of a training speed of the equalizer when a signal is severely distorted due to impairments of bandwidth limitation and frequency selective fading caused by fiber propagation. Consequently, a long preamble must be utilized during the activation stage, which may lead to a significant overhead. Studies show that for some extreme cases, the amount of overhead would become unacceptable.

The embodiments of the present disclosure determines, based on the channel characteristic of a channel from the optical network unit 120 to the optical line terminal 110, the preamble property for a transmission from the optical network unit 120 to the optical line terminal 110, and then generates the preamble having the preamble property, such that the preamble of the embodiments of the present disclosure is a ONU-specific preamble sequence (ONU 120 specific), in which a channel condition from the ONU 120 to the OLT 110 is considered. Such defects are overcome: preamble overhead is high and a training speed of the equalizer of the OLT is influenced because the signal is severely distorted due to impairments of the bandwidth limitation and the frequency selective fading caused by the fiber propagation when the PRBS type preamble patterns are used.

In some embodiments, the optical line terminal 110 transmits the preamble information to the optical network unit 120, and specifically, may transmit the configuration parameter for generating the preamble. The configuration parameter is determined based on the preamble property by the optical line terminal 110. Specifically, the optical line terminal 110 may convert the preamble property into the configuration parameter, and transmit the configuration parameter to the optical network unit 120, such that the preamble may be generated at the optical network unit 120 based on the configuration parameter.

The configuration parameter is transmitted to the optical network unit 120, and further the optical network unit 120 generates the preamble based on the configuration parameter, such that transmission overhead of the preamble may be better reduced.

In some embodiments, the optical network unit 120 may determine a filter for generating the preamble based on a filter coefficient as the configuration parameter, and then an original preamble sequence is filtered by the filter, so as to generate the preamble. As shown in Fig. 3, Fig. 3 shows a schematic diagram of a preamble generation algorithm model according to some embodiments of the present disclosure. Take an original preamble sequence is a random 4-level pulse amplitude modulation signal (PAM4) sequence mapped from a PRBS as an example, a parameter configuration of a filter is a filter coefficient, which is transmitted from an optical line terminal 110 to an optical network unit 120 in the form of preamble information. The algorithm model filters the random PAM4 sequence input, and a spectrum of a filtered signal is shaped to approximately compensate for channel loss. A subsequent PAM4 regeneration module rounds the filtered symbol's levels to the nearest PAM4 level, to obtain a regenerated PAM4 sequence. The regenerated PAM4 sequence output from the algorithm model may have a non-flat spectrum and an un-uniform symbol transition probability. In other words, in the example, a required preamble property computed by the OLT 110 may be converted into a set of filter tap coefficients, and then the OLT 110 transmits the filter tap coefficients to the ONU 120 as configuration parameters. In the example, the preamble property is embodied as a spectral shaping configuration associated with a preamble. The spectral shaping configuration is generally expressed as a filter tap matrix. In this way, it is implemented that the preamble property is converted into the configuration parameter.

The preamble generated through the above method is a non-PRBS sequence, and is a preamble generated by considering a specific channel characteristic of a channel from the optical network unit 120 to the optical line terminal 110, such that a ONU-specific preamble may be obtained through the method of the embodiments of the present disclosure. Since the ONU-specific preamble is related to a channel condition corresponding to the ONU, a preamble having minimum overhead for the ONU may be obtained.

Table 1 shows an example of encoding a configuration parameter for generating the preamble, and takes byte encoding of a PAM4 preamble parameter configuration as an example. In a PON system, the message is preferably implemented as one or more consecutive physical layer operation administration and maintenance (PLOAM) messages, which carry octets in Table 1 so as to complementing a traditional *Burst_Profile* message. The contents of Table 1 are only for illustration, and does not limit the protection scope of the embodiments of the present disclosure.

| **Octet** | **Content** |
|---|---|
| 1-2 | Preamble sequence ID |
| 3-36 | PRBS pattern (including random seed) |
| 37-38 | Length |
| 39-42 | Filter tap 1 (filter tap coefficient 1) |
| 43-46 | Filter tap 2 (filter tap coefficient 2) |
| ... | ... |
| ... | Filter tap N (filter tap coefficient N) |

In some other embodiments, any other preamble generation method capable of generating a PAM4 sequence having a required preamble property (for example, as a spectrum shape) may be used to achieve equivalent or similar effects, which is not limited by the embodiments of the present disclosure.

In some other embodiments, the preamble generation algorithm model does not use filter tap coefficients as parameters. For example, an algorithm may use a symbol transition probability table as input. Further, similarly, a probability value, instead of the filter tap coefficient, is encoded into a message of the configuration parameter accordingly.

In some other embodiments, the optical line terminal 110 transmits the preamble information to the optical network unit 120, and specifically, may transmit an indication indicating the preamble. The preamble is determined by the optical line terminal 110 based on the preamble property. For example, the optical line terminal 110 may determine the preamble according to the filter tap coefficient or the symbol transition probability.

The optical line terminal 110 may indicate the preamble through indications in various forms. For example, a sequence of the preamble may be included in the indication. The optical line terminal 110 transmits the preamble information to the optical network unit 120 as follows: the preamble may be determined based on the preamble property first, then an indication carrying the sequence of the preamble is transmitted to the optical network unit 120, the optical network unit 120 receives the indication indicating the preamble, and then the sequence of the preamble is converted into a physical signal of the preamble according to the indication, so as to obtain the generated preamble.

When the optical line terminal 110 transmits the indication indicating the preamble to the optical network unit 120, encoding may be conducted with reference to an encoding method as shown in Table 1. For example, if the OLT 110 directly transmits the preamble to the ONU 120 by transmitting the indication, a preamble content is encoded into the octets mentioned in Table 1, and the octets are transmitted to the optical network unit 120 as a series of preamble information.

As mentioned above, in some embodiments, the optical line terminal 110 may obtain the channel characteristic associated with the optical network unit 120 at an activation stage of the optical network unit 120. For example, when determining the channel characteristic, the optical line terminal 110 may determine the channel characteristic based on information received from the optical network unit 120 at the activation stage of the optical network unit 120. The optical network unit 120 may transmit the information to the optical line terminal 110. Accordingly, the optical line terminal 110 receives the information. The information may include at least one item of information such as a serial number and a ranging result of the optical network unit 120. The optical line terminal 110 determines the channel characteristic based on the information.

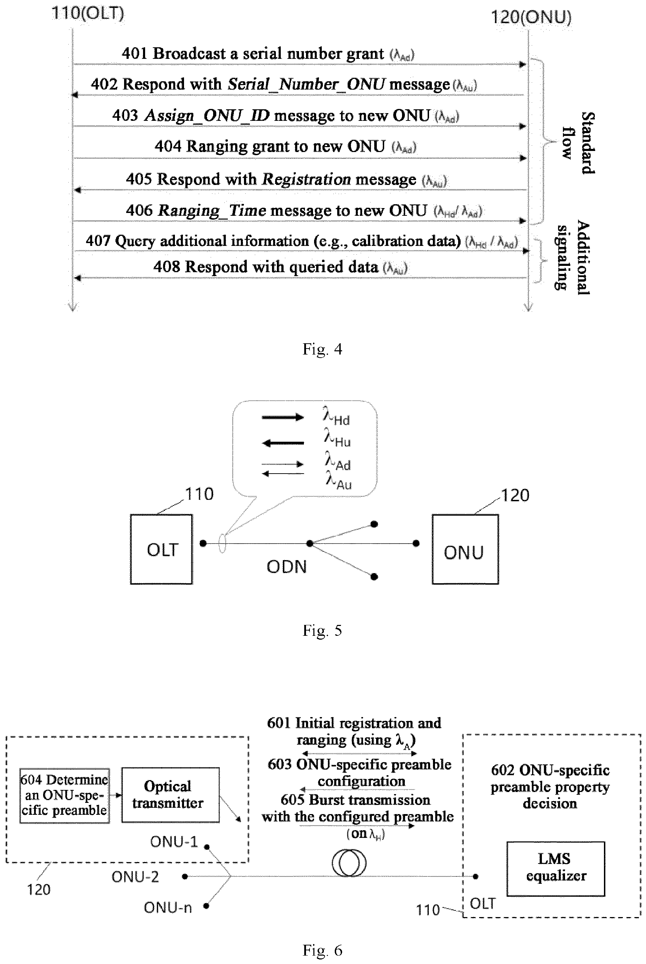

The activation stage of the optical network unit 120 may be conducted by using a normal activation flow, which comprises reporting of the serial number, ranging of the ONU 120, etc. Fig. 4 shows a schematic diagram of an activation flow of an ONU 120 according to some embodiments of the present disclosure. As shown in Fig. 4, a standard activation flow comprises:

An OLT 110 broadcasts a serial number grant to the ONU 120 through a λ_{Ad} wavelength (401).

The ONU 120 feeds a response with an ONU serial number message
(*Serial_Number_ONU*) to the OLT 110 through a λ_{Au} wavelength (402).

The OLT 110 transmits an ONU identity (ID) assignment message
(*Assign_ONU_ID*) to a new ONU 120 through the λ_{Ad} wavelength (403).

The OLT 110 further transmits a ranging grant to the new ONU 120 through the λ_{Ad} wavelength (404).

The ONU 120 feeds a response having a register message (*Registeration*) back to the OLT 110 through the λ_{Au} wavelength (405).

The OLT 110 transmits a ranging time message (*Ranging_Time*) to the new ONU 120 through a λ_{Hd} or λ_{Ad} wavelength (406).

Since information collected at an activation stage of the optical network unit 120 is associated with a channel condition, a channel characteristic may be determined more accurately.

With the assistance of a low-speed activation channel, a serial number reporting and ranging process may be the same as standard operations. In order to obtain more optimized output of a preamble sequence generation algorithm, in some other embodiments, when determining the channel characteristic, the optical line terminal 110 may further selectively collect other additional information from the optical network unit 120. The additional information is also for determining the channel characteristic. Specifically, after collecting a serial number and a ranging result of the optical network unit 120, the optical line terminal 110 may first determine whether the additional information further needs to be obtained from the optical network unit 120. If yes, a request for the additional information is transmitted to the optical network unit 120. The optical network unit 120 receives the request from the optical line terminal 110 and transmits the additional information to the optical line terminal 110, and further the optical line terminal 110 may collect the additional information from the optical network unit 120.

In some embodiments, the additional information collected from the optical network unit 120 may comprise, but is not limited to, one or more types of information such as a hardware version, a modulation format, a modulator bandwidth, and calibration data of the optical network unit 120. The calibration data is a driver frequency response, a modulator S-parameter, etc. for example. The additional information may be carried by a physical layer operation administration and maintenance (PLOAM) message or an ONU management and control interface (OMCI) message.

Continuing with reference to Fig. 4, at 407 and 408, a process of querying the additional information from the optical network unit 120 by the optical line terminal 110 and feeding back the additional information by the optical network unit 120 accordingly are shown. Specifically, the OLT 110 queries the additional information from the ONU 120 through the λ_{Hd} or λ_{Ad} wavelength (407). For example, the calibration data is queried. The ONU 120 feeds a response having the queried additional information back to the OLT 110 through the λ_{Au} wavelength (408).

The channel characteristic is determined by collecting the additional information, such that the channel characteristic may be reflected based on more information related to the channel condition, and further accuracy of determining the channel characteristic may be improved.

λ_{Au}, λ_{Ad}, λ_{Hd} and λ_{Hu} represent different types of wavelengths respectively. With reference to Fig. 5, a PON system having a plurality of types of wavelengths is shown, and the PON system comprise at least a pair of wavelengths for high-speed data transmission (λ_{Hd} and λ_{Hu}) and a pair of wavelengths for activation (λ_{Ad} and λ_{Au}). λ_{Hd} is a wavelength for high-speed data transmission in a downstream direction, λ_{Hu} is a wavelength for high-speed data transmission in an upstream direction, λ_{Ad} is a wavelength for activation in the downstream direction, λ_{Au} is a wavelength for activation in the upstream direction, and ODN is an optical distribution network.

In some embodiments, when determining a preamble property, the optical line terminal 110 may search, based on the information received from the optical network unit 120, a memory for a corresponding stored preamble property, where the stored preamble property is a preamble property previously generated by the optical line terminal 110 based on the information collected from the optical network unit 120 and stored in the memory. Then, after finding the stored preamble property, the optical line terminal 110 may determine the stored preamble property as the preamble property of the preamble transmitted from the optical network unit 120 to the optical line terminal 110. The stored preamble property is used as the preamble property of the preamble transmitted from the optical network unit 120 to the optical line terminal 110, such that the preamble property may be determined quickly, and time cost of the algorithm may be reduced.

In some embodiments, the preamble property may comprise a symbol transition probability associated with the preamble. Since for an N-level pulse amplitude modulation signal (for example, PAM4), the preamble's distribution probabilistic of an N symbol amplitude levels may be non-uniform, and N by N level transition probability is uneven, the OLT 110 may determine a probability configuration corresponding to the preamble according to the information collected from the ONU 120, so as to easily determine the preamble property.

Alternatively or additively, the preamble property may comprise a spectral shaping configuration associated with the preamble, and spectrum energy allocation (typically pre-emphasis for higher-frequency elements) needs to be customized dedicatedly, in consideration of specific frequency-selective fading of each ONU 120 link channel. In view of this, the spectral shaping configuration of the preamble may be determined, and the spectral shaping configuration is typically a pre-equalize filter tap matrix, such that the preamble property may be also determined easily.

In some embodiments, the optical line terminal 110 may transmit a first indication to the optical network unit 120, so as to indicate the optical network unit 120 to transmit the preamble to the optical line terminal 110. Accordingly, the optical network unit 120 responds to the first indication and transmits the preamble specified in the first indication to the optical line terminal 110. A preamble ID may be specified in the first indication, and the optical network unit 120 searches for a preamble to be transmitted according to the preamble ID.

In some embodiments, after the optical line terminal 110 transmitting the preamble information to the optical network unit 120, the optical network unit 120 may transmit an acknowledgement (ACK) of the preamble information to the optical line terminal 110. After receiving the acknowledgement of the preamble information from the optical network unit 120, the optical line terminal 110 may transmit the first indication to the optical network unit 120. In this way, it may be ensured that after the optical network unit 120 successfully receives all the preamble information, the optical line terminal 110 initiates bandwidth allocation again, so as to avoid the situation that the optical network unit 120 cannot respond to the first indication in time and transmit the corresponding preamble.

In the above embodiments, the preamble at block 205 is a long preamble, or referred to as a first preamble. This preamble has the preamble property, and it is transmitted from the optical network unit 120 to the optical line terminal 110 and is received by the optical line terminal 110.

The optical line terminal 110 may train an equalizer of the optical line terminal 110 by using the first preamble received.

In some embodiments, after completion of training of the equalizer of the optical line terminal 110 by using the preamble (specifically, the long preamble), the optical line terminal 110 may further transmit a second indication to the optical network unit 120, so as to indicate the optical network unit 120 to transmit a second preamble to the optical line terminal 110. The second preamble may also be referred to as a short preamble. That is, a length of the second preamble is less than a length of the first preamble.

The optical network unit 120 may generate, based on the preamble information received from the optical line terminal 110, the second preamble, and transmit the second preamble to the optical line terminal 110 after receiving, from the optical line terminal 110, the second indication to transmit the second preamble. Accordingly, the optical line terminal 110 receives the second preamble. The second preamble has the preamble property according to the embodiments of the present disclosure.

In some embodiments, the optical line terminal 110 may transmit the preamble information by using a first downlink wavelength (λ_{Ad}) or a second downlink wavelength (λ_{Hd}) and transmit the first indication or the second indication by using the second downlink wavelength (λ_{Hd}). A transmission speed corresponding to the second downlink wavelength (λ_{Hd}) is greater than a transmission speed corresponding to the first downlink wavelength (λ_{Ad}).

In some embodiments, the optical network unit 120 may transmit information for determining the channel characteristic by using a first uplink wavelength (λ_{Au}), and transmit the first preamble or the second preamble by using a second uplink wavelength (λ_{Hu}). A transmission speed corresponding to the second uplink wavelength (λ_{Hu}) is greater than a transmission speed corresponding to the first uplink wavelength (λ_{Au}).

The corresponding information is transmitted by using corresponding wavelengths having different transmission speeds, such that the optical line terminal 110 or the optical network unit 120 may conveniently recover the information transmitted from a channel.

The first preamble and the second preamble according to the embodiments of the present disclosure are non-pseudo random binary sequences. By using the non-pseudo random binary sequences, a lot of overhead caused by a PRBS type preamble is avoided.

Fig. 6 shows a schematic diagram of a principle of a method for optical communication according to some embodiments of the present disclosure. As shown in Fig. 6, the ONU 120 registers to the OLT 110 using the activation wavelength (λ_{A}) (601). The method of the registration may comply with a current standard flow of the OUN registering to the OLT 110, which includes serial number reporting and ONU ranging, etc. By registering the ONU 120, the OLT 110 may obtain a serial number, a ranging result and other information of the ONU 120.

After obtaining the serial number and the ranging result of the ONU 120, the OLT 110 may determine a preamble property required by the particular ONU 120 (602).

In some embodiments, the OLT 110 may determine a channel characteristic based on information feedback of the ONU 120 (for example, the serial number, the ranging result and other information of the ONU 120).

In some other embodiments, after obtaining the serial number, the ranging result and other information of the ONU 120, the OLT 110 may further determine whether the ONU 120 is required to further provide additional information. The additional information is one or more types of information such as a hardware version, a modulation format, a modulator bandwidth, and calibration data of the ONU 120 for example. If the OLT 110 determines to obtain the additional information from the ONU 120, the required additional information is collected from the ONU 120, and the ONU 120 may transmit, from the ONU 120, the additional information by using an activation wavelength (λ_{A}) channel. After obtaining the additional information, the OLT 110 may determine the channel characteristic based on the serial number and the ranging result of the ONU 120 and one or more of the additional information.

By further obtaining the above additional information from the ONU 120, the OLT 110 may determine the channel characteristic based on more information, such that the determined channel characteristic is more accurate.

After the OLT 110 determines the channel characteristic based on the information collected from the ONU 120, the preamble property of the preamble transmitted from the ONU 120 to the OLT 110 may be determined based on the channel characteristic.

In some examples, for an N-level pulse amplitude modulation signal (for example, PAM4), a distribution probabilistic of the N symbol amplitude levels of the preamble may be non-uniform, and N by N level transition probability is uneven, the OLT 110 may determine a probabilistic configuration corresponding to the preamble according to the information collected from the ONU 120. For example, according to one or more types of information such as the serial number, the ranging result, the hardware version, the modulation format, the modulator bandwidth and the calibration data of the ONU 120, a symbol transition probability corresponding to the preamble is determined. There is a preset mapping relation between the symbol transition probability and a signal level of the preamble. According to the information collected from the ONU 120, the OLT 110 may determine the corresponding symbol transition probability by looking up a table. The table looked up stores in advance a correspondence between the information collected from the ONU 120 and the symbol transition probability. The symbol transition probability corresponding to the preamble is an example of the preamble property.

In some other embodiments, spectrum energy allocation (generally pre-emphasis for higher frequency elements) needs to be customized dedicatedly in consideration of specific frequency-selective fading of each ONU 120 link channel. In view of this, a spectral shaping configuration of the preamble may be determined, and the spectral shaping configuration is generally a pre-equalization filter tap matrix, that is, a filter coefficient of a filter used in a process of generating the preamble. The spectral shaping configuration is another example of the preamble property.

Based on the preamble property determined, the OLT 110 transmits detailed preamble information to the ONU 120 accordingly (603).

In some embodiments, the OLT 110 may generate the preamble according to the preamble property determined, and transmit an indication indicating the preamble to the ONU 120 through a series of PLOAM messages. The embodiments of the present disclosure does not specifically limit a form in which the preamble is indicated to the ONU 120. For example, an entire sequence of the preamble may be included in the indication, such that the ONU may obtain the preamble generated by the OLT 110 from the indication.

In some other embodiments, the OLT 110 may transmit, to the ONU 120, a preamble configuration parameter for generating the preamble, and the ONU 120 may generate, based on the parameter and by using a predefined program, a symbol sequence of the preamble. The preamble configuration parameter is transmitted to the ONU 120, and further the ONU 120 generates the preamble, such that preamble overhead may be better reduced.

The ONU 120 determines the preamble according to a preamble configuration message (that is, preamble information) transmitted from the OLT 110 (604), so as to assemble uplink frames (upstream frames). In the embodiments of the present disclosure, the preamble is generated based on a preamble configuration specified for the ONU 120, so the preamble may be referred to as a configured preamble.

Normal operation of uplink transmission is conducted on a high-speed wavelength (λ_{H}) channel, that is, burst transmission having the configured preamble is conducted (605). During normal operation, the OLT 110 may further optimize the preamble configuration of each ONU 120 based on a physical layer signal characteristic, and iterates the above steps 603 and 604.

At present, for all ONUs, a 50G PON standard only supports a PRBS-based preamble patterns, where the OLT designates at least one PRBS preamble pattern and a random seed to the ONU before the ONU starts to transmit data traffic in an activation process of the ONU. Although there have been discussions on using different PRBSs for different ONUs and for different uplink bursts (upstream bursts), it still lacks consideration and discussion on optimization of a convergence speed of a least mean square (LMS)-based equalizer.

In order to solve the above problems, the embodiments of the present disclosure is improved. From the above description of the embodiments of the present disclosure, it may be seen that the solution of the embodiments of the present disclosure does not need to generate the PRBS and random seeds, that is, the preamble of the embodiments of the present disclosure is a non-pseudo random binary sequence (non-PRBS) specified for the ONU, and a convergence speed of an equalizer is considered to reduce overall preamble overhead and improve operation efficiency of a PON system.

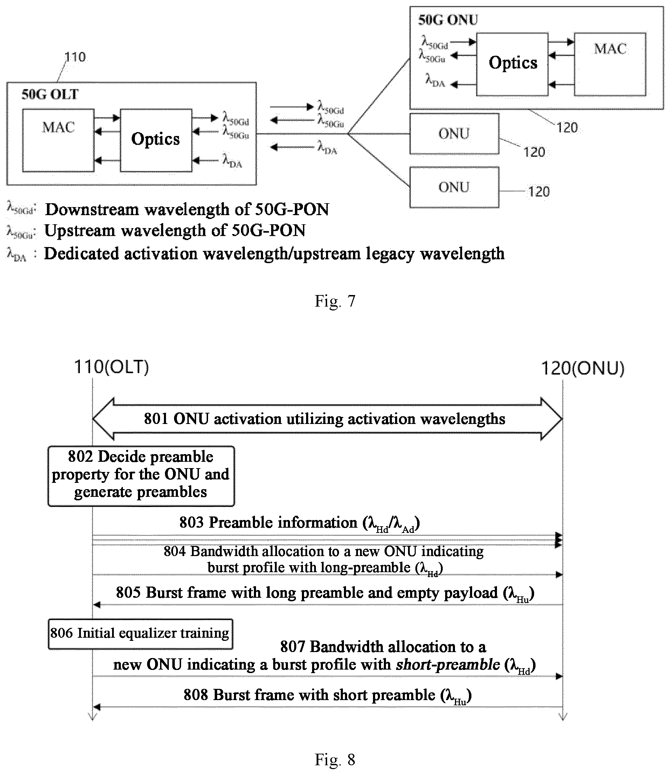

In a high-speed PON system, the ONU components have limited bandwidth. Since the OLT 110 may not be able to recover a highly distorted initial serial number registration signal from the ONU 120, an activation procedure of the ONU 120 is likely to fail. An additional wavelength for activation may be configured to activate the ONU 120. On a low-speed activation wavelength, the OLT 110 first registers the ONU 120, and then a long preamble is designated for initially equalizer training on a high-speed wavelength channel. After the equalizer completes its training for the first time, shorter preambles may be used for the particular ONU 120. Reference may be made to Fig. 7 for an illustrative schematic diagram of using a dedicated wavelength in an activation stage of an ONU in a high-speed PON system. Although 50G PON is taken as an example in Fig. 7, the embodiments of the present disclosure is not limited to 50G PON. Some embodiments of the present disclosure extend the solution in Fig. 7, and further optimize a preamble configuration based on registering the ONU 120 by using a low-speed activation wavelength, so as to further reduce preamble overhead of activation and subsequent normal operations.

Fig. 8 shows a schematic diagram of interaction between an OLT and an ONU according to some embodiments of the present disclosure. It should be noted that an interaction process between the OLT and the ONU depicted in Fig. 8 may be regarded as a specific example of the interaction process shown in Fig. 2.

As shown in Fig. 8, the ONU first registers with the OLT 110 through a low-speed activation channel by using a standard activation flow (801). By registering the ONU, the OLT 110 may collect at least one item of information of a serial number and a ranging result of the ONU, and then, based on the information collected at an activation stage of the ONU, the OLT 110 determines a preamble property required by the ONU 120 and generates a preamble based on the preamble property (802).

In some embodiments, an ONU 120 is a newly activated ONU that has not been recorded by the OLT 110, such that the OLT 110 obtains a required preamble property or a preamble having some preamble property by executing an algorithm. Specifically, input of the algorithm may include, but is not limited to, one or more types of information of the serial number, the ranging result (for example, a fiber length), a hardware version, a modulation format, a modulator bandwidth, and calibration data (for example, module characteristic data, such as a driver frequency response and a modulator S-parameter) of the ONU. Output of the algorithm may be a set of desired preamble properties (such as length, spectrum distribution and symbol transition probabilities). A specific logic of the algorithm for obtaining the above output according to the above input is not specifically limited in the example of the present disclosure. As an example, algorithm logic may specify a correspondence between one or more types of information input from the algorithm and the output of the algorithm.

In some embodiments, if an ONU 120 is not a newly activated ONU, the OLT 110 may use a historical output result of the algorithm. For example, if the OLT 110 already stores a stored preamble property of a corresponding ONU, a corresponding algorithm output result may be loaded from a memory according to information collected from the ONU. That is, the stored preamble property corresponding to the ONU may be determined as the preamble property required by the ONU 120.

In some embodiments, the output of the algorithm executed by the OLT 110 may be directly one or more preamble sequences having the preamble property required.

In the embodiments, a preamble sequence is directly generated at the OLT 110, and transmitted to the ONU 120 through λ_{Hd} (a wavelength for high-speed data transmission in downstream) or λ_{Ad} (a wavelength for activation in downstream) through a series of preamble information (803). A plurality of preamble sequences having different lengths may exist, and each preamble sequence is associated with a unique preamble sequence ID.

After receiving the preamble information transmitted from the OLT 110, the ONU 120 may selectively feed one or more acknowledgement messages back to the OLT 110, so as to indicate successful configurations of all preamble sequences.

Then, the OLT 110 transmits an indication of bandwidth allocation (that is, a first indication) to the ONU 120 through λ_{Hd}. The first indication specifies a specific burst profile in an allocation structure (804). Since the OLT 110 needs to do equalizer initial train for the new ONU 120, an index of the burst profile designates a long preamble sequence ID.

Once the ONU 120 receives the allocation structure, a first upstream burst on λ_{Hu} with a designated long preamble (that is, a first preamble) starts to be transmitted, which includes a long preamble and an empty payload (805).

After successfully training the equalizer with one or more long preambles from the ONU 120 (806), the OLT 110 may update a bandwidth allocation structure for the ONU 120, that is, transmit a second indication to the ONU 120 through λ_{Hd}, where the second indication has a burst profile of a short preamble (807), so as to indicate the ONU 120 to change to a short preamble (that is, a second preamble) for transmitting subsequent bursts.

According to the second indication, the ONU 120 transmits a burst frame having the short preamble to the OLT 110 through λ_{Hu} (808), so as to reduce overhead.

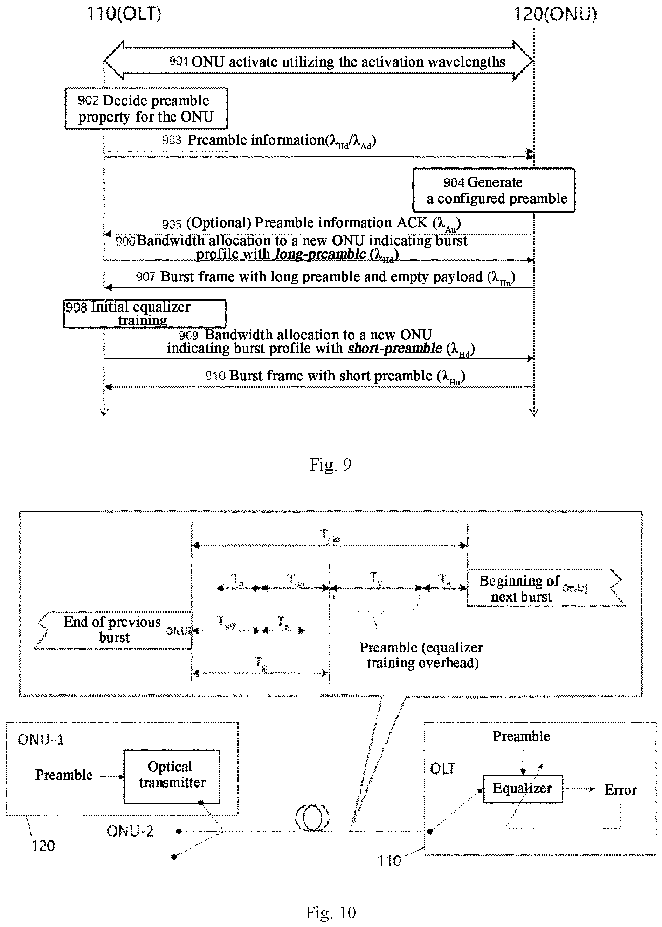

Fig. 9 shows a schematic diagram of interaction between an OLT and an ONU according to some other embodiments of the present disclosure. It should be noted that an interaction process between the OLT and the ONU depicted in Fig. 9 may be regarded as a specific example of the interaction process shown in Fig. 2.

Firstly, the ONU 120 registers to the OLT 110 through a low-speed activation channel by using a normal activation flow, that is, the ONU 120 is activated by using an activation wavelength (901). Then, the OLT 110 determines a preamble property required by the ONU 120 based on information collected at an activation stage of the ONU 120 (902). The OLT 110 determines preamble information based on the preamble property, and transmits the preamble information to the ONU 120 through λ_{Hd} (a wavelength for downlink high-speed data transmission) or λ_{Ad} (a wavelength for activation in a downstream) (903). The preamble information includes a preamble configuration parameter for generating a preamble, and the preamble information may be transmitted in the form of a message.

The ONU 120 generates a configured preamble according to the preamble configuration parameter (904).

As a preferred embodiment, the ONU 120 may feed an acknowledgement message back to the OLT 110 through λ_{Au} after receiving the preamble information (905), so as to indicate successful configurations of all preamble sequences.

The OLT 110 transmits an instruction of bandwidth allocation (that is, a first indication) to the ONU 120 through λ_{Hd}. The first indication specifies a specific burst profile in an allocation structure (906). Since the OLT 110 needs to do equalizer initial training for the new ONU 120, an index of the burst profile designates a long preamble sequence ID.

After receiving the first indication, the ONU 120 starts to transmit a burst frame having a designated long preamble (that is, a first preamble) and an empty payload on λ_{Hu} (a wavelength for uplink high-speed data transmission) (907).

After successfully training the equalizer by using one or more long preambles from the ONU 120 (908), the OLT 110 may update a bandwidth allocation structure for the ONU 120, that is, transmit a second indication to the ONU 120 through λ_{Hd}, where the second indication has a burst profile of a short preamble (909), so as to indicate the ONU 120 to change to use a short preamble (that is, a second preamble) when transmitting subsequent bursts.

According to the second indication, the ONU 120 transmits a burst frame having the short preamble to the OLT 110 through λ_{Hu} (910), so as to reduce overhead.

In the example shown in Fig. 9, after the ONU 120 conducts initial registration by using the activation wavelength, the OLT 110 does not directly generate the preamble sequence, but transmits algorithm parameters required for preamble generation to the ONU 120. After receiving a message of a preamble parameter configuration, the ONU 120 executes a predefined algorithm so as to generate a sequence. Then, the ONU 120 transmits an acknowledgement message so as to indicate the preamble sequence required for successful channel configuration with λ_{Au} (a wavelength for activation in upstream).

Fig. 10 shows an illustrative schematic diagram of physical layer overhead in a time division multiplexing (TDM)-PON uplink scenario according to some embodiments of the present disclosure.

As shown in Fig. 10, a plurality of ONUs 120 may exist, such as ONU-1, ONU-2, ..., etc. The ONUs 120 are in communication with the OLT 110 via a communication channel. Each ONU 120 includes an optical transmitter module. A preamble is transmitted to the OLT 110 via the communication channel by means of the optical transmitter module, so as to train of an equalizer of the OLT 110. For uplink data transmission of a high-speed PON system, an equalizer based on adaptive digital signal processing (DSP) may be used for the optical line terminal (OLT) 110, so as to accurately recover signals from different optical network units (ONUs) 120. The optical network units 120 have various channel conditions (for example, wavelengths, component bandwidths, and fiber lengths). In order to adaptively tune or train a coefficient based on the equalizer, a preamble sequence known by the OLT 110 is attached before each burst from the ONUs 120.

Physical layer overhead time Tₚₗₒ is specifically configured to adapt to five physical processes in the PON, which are laser on/off time, timing drift tolerance, level recovery, clock recovery, and start of burst delineation. The physical layer overhead time Tₚₗₒ includes three parts about transmission in which ONU data mode. The parts may be referred to as guard time T_{g}, preamble time Tₚ, and delimiter time T_{d}, and thus following Tₚₗₒ≥T_{g}+Tₚ+T_{d}. During T_{g}, power transmitted by the ONU 120 cannot exceed a nominal zero level. During Tₚ, the ONU 120 may transmit a preamble mode, which provides a signal pattern for a required transition density and for fast level adjustment, clock recovery and optional equalization functions. Lastly, during T_{d}, the ONU 120 may transmit a special data pattern, a delimiter with optimal autocorrelation characteristic that enables the OLT 110 to find a beginning of a burst payload.

Another parameter of a control logic on the PON is total peak-to-peak timing uncertainty Tᵤ, which is arises from variations of the time of flight caused by the fiber and a component along with temperature and other factors. In this way, the OLT 110 must comply are then: T_{g}>Tₒₙ+Tᵤ, and T_{g}>T_{off}+Tᵤ. The first condition make sure that the following burst's laser on ramp-up does not fall on top of the last burst's data, and the second condition makes sure that the last burst's laser off tail-off does not fall on top of the following burst's preamble.

It may be seen from Fig. 10 that the preamble time Tₚ constitutes an important part of the physical layer overhead. Therefore, it is a very ideal and beneficial way of improving transmission efficiency to reduce Tₚ.

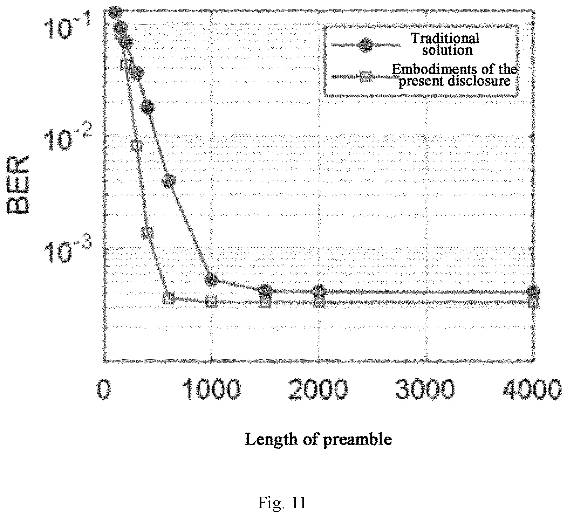

Fig. 11 shows a schematic comparison diagram of a convergence speed of training of an equalizer according to the embodiments of the present disclosure and a traditional solution. The traditional solution is to train the equalizer by using a PRBS-based preamble. A preamble sequence specified for an ONU 120 (ONU-specific preamble sequence) according to the embodiments of the present disclosure is a non-PRBS sequence (non-pseudo random binary sequence) determined in consideration of a channel condition, so a training convergence speed of a LMS equalizer may be improved compared with the training speed of the traditional solution. Fig. 11 shows simulation results, in which a bandwidth-limited PAM4 signal from the ONU 120 is equalized at the OLT 110 by a typical LMS equalizer. Through the method, a LMS training preamble length required to achieve the same bit error rate (BER) performance is significantly reduced.

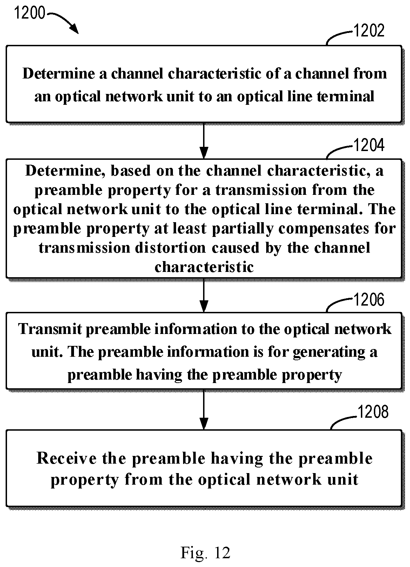

Fig. 12 shows a schematic diagram of a process for optical communication according to some embodiments of the present disclosure. As shown in Fig. 12, the method 1200 may be implemented at an optical line terminal 110.

At block 1202, a channel characteristic of a channel from an optical network unit 120 to the optical line terminal 110 is determined.

At block 1204, based on the channel characteristic, a preamble property for a transmission from the optical network unit 120 to the optical line terminal 110 is determined. The preamble property at least partially compensates for transmission distortion caused by the channel characteristic.

At block 1206, preamble information is transmitted to the optical network unit 120. The preamble information is for generating a preamble having the preamble property.

At block 1208, the preamble having the preamble property is received from the optical network unit 120.

In some embodiments, the optical line terminal 110 transmits the preamble information, and specifically, transmits a configuration parameter for generating the preamble. The configuration parameter is determined based on the preamble property by the optical line terminal 110.

In some embodiments, the optical line terminal 110 transmits the preamble information, and specifically, transmits an indication indicating the preamble to the optical network unit 120. The preamble is determined by the optical line terminal 110 based on the preamble property.

In some embodiments, the optical line terminal 110 may determine, based on information received from the optical network unit 120 at an activation stage of the optical network unit 120, the channel characteristic.

The information received from the optical network unit 120 at the activation stage of the optical network unit 120 may comprise at least one of a serial number and a ranging result of the optical network unit 120 for example.

The optical line terminal 110 may further determine that additional information of the optical network unit 120 is required to determine the channel characteristic and transmit a request for the additional information to the optical network unit 120, so as to receive the additional information from the optical network unit 120.

In some embodiments, the additional information may include, but is not limited to, information such as a hardware version, a modulation format, a modulator bandwidth and calibration data of the optical network unit 120.

When determining the preamble property, the optical line terminal 110 may search, based on the information received from the optical network unit 120, a memory for a corresponding stored preamble property. The optical line terminal 110 determines the stored preamble property as the preamble property in the event of finding the stored preamble property.

In some embodiments, the preamble property may comprise a symbol transition probability associated with the preamble. Alternatively or additively, the preamble property may comprise a spectral shaping configuration.

In some embodiments, the optical line terminal 110 may transmit a first indication to the optical network unit 120, so as to indicate the optical network unit 120 to transmit the preamble to the optical line terminal 110.

In some embodiments, the optical line terminal 110 may transmit the first indication to the optical network unit 120 in the event of receiving an acknowledgement of the preamble information from the optical network unit 120.

In some embodiments, the preamble mentioned at the blocks 1206 and 1208 is a first preamble. The optical line terminal 110 may train an equalizer of the optical line terminal 110 by using the first preamble. After completion of training of the equalizer, the optical line terminal 110 may transmit a second indication to the optical network unit 120, so as to indicate the optical network unit 120 to transmit a second preamble to the optical line terminal 110, and further receive the second preamble from the optical network unit 120. A length of the second preamble is less than a length of the first preamble.

The first preamble and the second preamble according to the embodiments of the present disclosure both have the preamble property mentioned above and are non-pseudo random binary sequences.

In some embodiments, the preamble information is transmitted by using a first downlink wavelength or a second downlink wavelength, the first indication or the second indication is transmitted by using the second downlink wavelength, and a transmission speed corresponding to the second downlink wavelength is greater than a transmission speed corresponding to the first downlink wavelength.

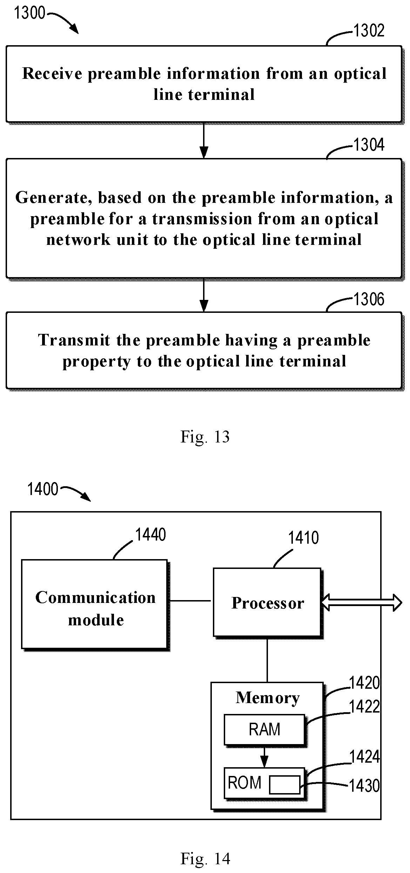

Fig. 13 shows a schematic diagram of a process for optical communication according to some other embodiments of the present disclosure. As shown in Fig. 13, a method 1300 may be implemented at an optical network unit 120.

At block 1302, preamble information is received from an optical line terminal 110.

The preamble information is used for generating a preamble having a preamble property. The preamble property is determined based on a channel characteristic of a channel from the optical network unit 120 to the optical line terminal 110, and the preamble property at least partially compensates for transmission distortion caused by the channel characteristic.

At block 1304, based on the preamble information, the preamble transmitted from the optical network unit 120 to the optical line terminal 110 is generated.

At block 1306, the preamble having the preamble property is transmitted to the optical line terminal 110.

In some embodiments, the preamble information comprises a configuration parameter for generating the preamble.

In some embodiments, the optical network unit 120 generates the preamble based on the preamble information as follows: a filter for generating the preamble is determined based on a filter coefficient as the configuration parameter, and then an original preamble sequence is filtered by the filter, so as to generate the preamble.

In some embodiments, the preamble information includes an indication indicating the preamble.

In some embodiments, the optical network unit 120 may transmit, to the optical line terminal 110, information for determining the channel characteristic. For example, at an activation stage of the optical network unit 120, information such as a serial number and a ranging result of the optical network unit 120 is transmitted to the optical line terminal 110.

In some embodiments, after receiving a request for additional information from the optical line terminal 110, the optical network unit 120 transmits the additional information to the optical line terminal 110. The additional information is used for determining the channel characteristic.

In some embodiments, the additional information may comprise, but is not limited to, a hardware version, a modulation format, a modulator bandwidth, and calibration data of the optical network unit 120.

In some embodiments, the preamble property comprises a symbol transition probability associated with the preamble. Alternatively or additively, the preamble property may comprise a spectral shaping configuration.

In some embodiments, after receiving, from the optical line terminal 110, a first indication to transmit the preamble, the optical network unit 120 may transmit, according to a preamble ID specified in the first indication, the corresponding preamble to the optical line terminal 110.

In some embodiments, after receiving the preamble information from the optical line terminal 110, the optical network unit 120 may transmit an acknowledgement of the preamble information to the optical line terminal 110.

The preamble mentioned at the blocks 1302-1306 may be referred to as a first preamble. In some embodiments, the optical network unit 120 may further receive, from the optical line terminal 110, a second indication to transmit a second preamble, and transmit, according to a preamble ID specified in the second indication, the corresponding second preamble to the optical line terminal 110. A length of the second preamble is less than a length of the first preamble.

In some embodiments, the second preamble is also generated based on the preamble information.

In some embodiments, the information for determining the channel characteristic is transmitted by using a first uplink wavelength. The first preamble or the second preamble is transmitted by using a second uplink wavelength, and a transmission speed corresponding to the second uplink wavelength is greater than a transmission speed corresponding to the first uplink wavelength.

In some embodiments, the first preamble and the second preamble are non-pseudo random binary sequences.

In some embodiments, an apparatus capable of performing the method 1200 (for example, implementing the method at an optical line terminal 110) may comprise means for performing the respective steps of the method 1200. The means may be implemented in any suitable form. For example, the means may be implemented in a circuitry or software module.

In some embodiments, the apparatus may comprise means for determining a channel characteristic of a channel from an optical network unit 120 to the optical line terminal 110; means for determining, based on the channel characteristic, a preamble property for a transmission from the optical network unit 120 to the optical line terminal 110, the preamble property at least partially compensating for transmission distortion caused by the channel characteristic; means for transmitting preamble information to the optical network unit 120, the preamble information being for generating a preamble having the preamble property; and means for receiving the preamble having the preamble property from the optical network unit 120.

In some embodiments, the means for transmitting the preamble information to the optical network unit 120, specifically, may be for transmitting a configuration parameter for generating the preamble to the optical network unit 120. The configuration parameter is determined by the optical line terminal 110 based on the preamble property.

In some other embodiments, the means for transmitting the preamble information to the optical network unit 120, specifically, may be for transmitting an indication indicating the preamble to the optical network unit 120. The preamble is determined by the optical line terminal 110 based on the preamble property.

In some embodiments, the means for determining the channel characteristic of a channel from the optical network unit 120 to the optical line terminal 110 may determine, based on information received from the optical network unit 120 at an activation stage of the optical network unit 120, the channel characteristic.

In some embodiments, the information received from the optical network unit 120 at the activation stage of the optical network unit 120 may comprise one or more items of information such as a serial number and a ranging result of the optical network unit 120.

In some embodiments, the optical line terminal 110 may comprise means for, in response to determining that additional information of the optical network unit 120 is required to determine the channel characteristic, transmitting a request for the additional information to the optical network unit 120.

In some embodiments, the additional information may comprise one or more types of information such as a hardware version, a modulation format, a modulator bandwidth, and calibration data of the optical network unit 120.

In some embodiments, the means for determining, based on the channel characteristic, the preamble property of the preamble transmitted from the optical network unit 120 to the optical line terminal 110, specifically, is for searching, based on the information received from the optical network unit 120, a memory for a corresponding stored preamble property, and determining the stored preamble property as the preamble property in response to finding the stored preamble property.

In some embodiments, the preamble property may comprise a symbol transition probability associated with the preamble. Alternatively or additively, the preamble property may comprise a spectral shaping configuration associated with the preamble.

In some embodiments, the optical line terminal 110 may further comprise means for training an equalizer of the optical line terminal 110 by using the preamble received.

In some embodiments, the optical line terminal 110 may further comprise means for transmitting a first indication to the optical network unit 120, to indicate the optical network unit 120 to transmit the preamble to the optical line terminal 110.

In some embodiments, the means for transmitting the first indication to the optical network unit 120, to indicate the optical network unit 120 to transmit the preamble to the optical line terminal 110, specifically, may transmit, after receiving an acknowledgement of the preamble information from the optical network unit 120, the first indication to the optical network unit 120.

The preamble having the preamble property and generated by the preamble information may be referred to as a first preamble. In some embodiments, the optical line terminal 110 may further comprise means for transmitting, to the optical network unit 120 and after completion of training of an equalizer of the optical line terminal 110 by using the preamble, a second indication, to indicate the optical network unit 120 to transmit a second preamble to the optical line terminal 110. The optical line terminal 110 may further comprise means for receiving the second preamble from the optical network unit 120. A length of the second preamble is less than a length of the first preamble.

In some embodiments, the second preamble has the preamble property mentioned above.

In some embodiments, the preamble information is transmitted by using a first downlink wavelength or a second downlink wavelength. The first indication or the second indication is transmitted by using the second downlink wavelength, and a transmission speed corresponding to the second downlink wavelength is greater than a transmission speed corresponding to the first downlink wavelength.

In some embodiments, the preamble mentioned above (the first preamble or the second preamble) may be a non-pseudo random binary sequence.

In some embodiments, the apparatus further comprises means for performing other steps in some embodiments of the method 1200. In some embodiments, the means comprises at least one processor; and at least one memory including computer program code, the at least one memory and computer program code configured to, with the at least one processor, cause the performance of the apparatus.

In some illustrative embodiments, an apparatus capable of performing the method 1300 (for example, implementing the method at an optical network unit 120) may comprise means for performing the respective steps of the method 1300. The means may be implemented in any suitable form. For example, the means may be implemented in a circuitry or software module.

In some illustrative embodiments, the apparatus may comprise means for receiving preamble information from an optical line terminal 110. The preamble information is for generating a preamble having a preamble property, and the preamble property is determined based on a channel characteristic of a channel from the optical network unit 120 to the optical line terminal 110, and the preamble property at least partially compensates for transmission distortion caused by the channel characteristic; means for generating, based on the preamble information, the preamble transmitted from the optical network unit 120 to the optical line terminal 110; and means for transmitting the preamble having the preamble property to the optical line terminal 110.

In some embodiments, the preamble information may comprise a configuration parameter for generating the preamble.

In some embodiments, the means for generating, based on the preamble information, the preamble for a transmission from the optical network unit 120 to the optical line terminal 110, specifically, may determine, based on a filter coefficient as the configuration parameter, a filter for generating the preamble, and then filter an original preamble sequence by using the filter, to generate the preamble.

In some other embodiments, the preamble information may comprise an indication indicating the preamble.

In some embodiments, the optical network unit 120 may further comprise means for transmitting, to the optical line terminal 110, information for determining the channel characteristic.

In some embodiments, the means for transmitting, to the optical line terminal 110, the information for determining the channel characteristic, specifically, may transmit, to the optical line terminal 110 and at an activation stage of the optical network unit, one or more items of information such as a serial number and a ranging result of the optical network unit.

In some embodiments, the optical network unit 120 may further comprise means for, in response to receiving a request for the additional information from the optical line terminal 110, transmitting additional information to the optical line terminal 110. The additional information is for determining the channel characteristic.

In some embodiments, the additional information may comprise one or more items of information such as a hardware version, a modulation format, a modulator bandwidth and calibration data of the optical network unit.

In some embodiments, the preamble property comprises a symbol transition probability associated with the preamble. Alternatively or additively, the preamble property comprises a spectral shaping configuration associated with the preamble.

In some other embodiments, the means for transmitting, to the optical line terminal 110, the preamble having the preamble property, specifically, may transmit, according to a first indication to transmit the preamble, the preamble to the optical line terminal 110. The first indication is received from the optical line terminal 110.

In some embodiments, the optical network unit 120 further comprise means for, in response to receiving the preamble information from the optical line terminal 110, transmitting an acknowledgement of the preamble information to the optical line terminal 110.

In some embodiments, the preamble generated based on the preamble information and for a transmission from the optical network unit 120 to the optical line terminal 110 is a first preamble. The optical network unit 120 may further comprise means for transmitting a second preamble to the optical line terminal 110 after receiving, from the optical line terminal 110, a second indication to transmit the second preamble. A length of the second preamble is less than a length of the first preamble.

In some embodiments, the optical network unit 120 may further comprise means for generating the second preamble based on the preamble information.

In some embodiments, the information for determining the channel characteristic is transmitted by using a first uplink wavelength, and the first preamble or the second preamble is transmitted by using a second uplink wavelength. A transmission speed corresponding to the second uplink wavelength is greater than a transmission speed corresponding to the first uplink wavelength.

In some embodiments, the preamble mentioned above (the first preamble or the second preamble) is a non-pseudo random binary sequence.

In some embodiments, the apparatus further comprises means for performing other steps in some embodiments of the method 1300. In some embodiments, the means comprises at least one processor; and at least one memory including computer program code, the at least one memory and computer program code configured to, with the at least one processor, cause the performance of the apparatus.

Some embodiments of the present disclosure further provide a device for optical communication. The device comprises: a processor; and a transceiver communicatively coupled to the processor. The processor is configured to cause the device to perform the method 1200.

Some other embodiments of the present disclosure further provide a device for optical communication. The device includes: a processor; and a transceiver communicatively coupled to the processor. The processor is configured to cause the device to perform the method 1300.

Fig. 14 is a simplified block diagram of an electronic device 1400 that is suitable for implementing embodiments of the present disclosure. The device 1400 may be provided to implement the communication device, for example, an OLT 110 and an ONU 120 as shown in Fig. 1. As shown in the figure, the device 1400 includes one or more processors 1410, one or more memories 1420 coupled to the processor 1410, and one or more communication modules 1440 coupled to the processor 1410.

The communication module 1440 is for bidirectional communications. For example, the communication module 1440 may include a transmitter, a receiver, or a transceiver used for the example of the present disclosure. A communication interface may represent any interface necessary for communication with other network elements.

The processor 1410 may be of any type suitable to the local technical network, and may include, but not limited to, one or more of general purpose computers, special purpose computers, microcontrollers, digital signal processors (DSPs), and controller-based multi-core controller architecture. The device 1400 may have multiple processors, such as an application-specific integrated circuit chip that is slaved in time to a clock which synchronizes with the main processor.

The memories 1420 may include one or more non-volatile memories and one or more volatile memories. Examples of the non-volatile memories include, but are not limited to, a read-only memory (ROM) 1424, an electrically programmable read only memory (EPROM), a flash memory, a hard disk, a compact disk (CD), a digital video disk (DVD), and other magnetic memories and/or optical memories. Examples of the volatile memory include, but are not limited to, a random access memory (RAM) 1422 and other volatile memories that will not last in the power-down duration.

A computer program 1430 includes a computer executable instructions that are executed by the associated processor 1410. The program 1430 may be stored in the ROM 1420. The processor 1410 may perform any suitable actions and processing operations by loading the program 1430 into the RAM 1420.

The embodiments of the present disclosure may be implemented by means of the program 1430, such that the device 1400 may execute any process depicted in Figs. 2-13 of the present disclosure. The embodiments of the present disclosure may further be implemented by hardware or by a combination of software and hardware.

In some embodiments, the program 1430 may be tangibly embodied in a computer-readable medium. The computer-readable medium may be included in the device 1400 (such as the memory 1420) or other storage devices accessible to the device 1400. The program 1430 may be loaded into the RAM 1422 from a computer-readable medium, so as to be executed. The computer-readable medium may include any type of tangible non-volatile memory, for example, ROM, EPROM, a flash memory, a hard disk, CD, DVD, etc.

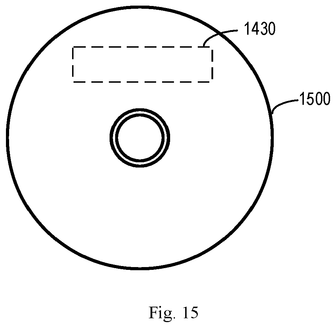

Fig. 15 shows an example of a computer-readable medium 1500 in the form of CD or DVD. The program 1430 is stored on the computer-readable medium.

Generally, various embodiments of the present disclosure may be implemented in hardware or private circuits, software, logics or their any combination. Some aspects may be implemented by hardware, while other aspects may be implemented by firmware or software and may be executed by a controller, a microprocessor or other computing devices. Although various aspects of the embodiments of the present disclosure are shown and described as block diagrams, flow diagrams, or some other diagram forms, it should be understood that the blocks, apparatuses, systems, technologies or methods described herein can be implemented as non-limiting instances such as hardware, software, firmware, dedicated circuits, logics, general-purpose hardware or controllers or other computing devices, or some combination thereof.

The present disclosure further provides at least one computer program product tangibly stored on a non-transitory computer-readable storage medium. The computer program product includes a computer-executable instruction, for example, an instruction included in a program module, which is executed in a device on a target real or virtual processor so as to execute the methods 1200 and 1300 as shown in Figs. 12 and 13. Generally, the program module includes a routine, a program, a library, an object, a class, an assembly, a data structure, etc. that executes a specific task or implements a specific abstract data type. In various embodiments, the functions of the program modules may be combined or divided among the program modules as required. A machine-executable instruction for the program module may be executed within a local or distributed device. In the distributed device, the program module may be located in local and remote storage media.

Computer program codes configured to implement the method of the present disclosure may be written in one or more programming languages. The computer program codes may be provided for a general-purpose computer, a special-purpose computer, or a processor of another programmable data processing apparatus, such that when the program codes are executed by a computer or other processor programmable data processing apparatuses, a function/operation specified in a flow diagram and/or block diagram may be implemented. The program codes may be executed entirely on a computer, executed partially on the computer, executed as a stand-alone software package, executed partially on the computer and partially on a remote computer, or executed entirely on the remote computer or a server.

In the context of the present disclosure, the computer program codes or related data may be carried by any suitable carrier, so as to enable a device, an apparatus or a processor to execute various processing operations and operations described above. Instances of the carrier include a signal, a computer-readable medium, etc. Instances of the signal may include electrical, optical, radio, sound or other forms of propagated signals, such as carrier waves and infrared signals.

The computer-readable medium may be any tangible medium including or storing a program for or relating to a system, apparatus or device for executing an instruction. The computer-readable medium may be a computer-readable signal medium or a computer-readable storage medium. The computer-readable medium may include, but not limited to, an electronic, magnetic, optical, electromagnetic, infrared, or semiconductor system, apparatus, or device, or their any suitable combination. More detailed instances of the computer-readable storage medium include an electrical connection through one or more wires, a portable computer disk, a hard disk, RAM, ROM, EPROM or a flash memory, an optical storage device, a magnetic storage device, or their any suitable combination.

Further, although the operations of the method of the present disclosure are described in a particular order in the drawings, it is not required or implied that the operations have to be executed in the particular order, or that all the illustrated operations have to be executed to achieve desired results. On the contrary, an execution order of the steps depicted in the flow diagrams is changeable. Additionally or alternatively, some steps may be omitted. A plurality of steps may be combined into one step for execution, and/or one step may be divided into a plurality of steps for execution. It should be noted that features and functions of the two or more apparatuses according to the present disclosure may be embodied in one apparatus. Conversely, the features and functions of one apparatus described above may be further divided to be embodied by a plurality of apparatuses.

Although the present disclosure is described with reference to several specific examples, it should be understood that the present disclosure is not limited to the specific examples disclosed. The present disclosure is intended to cover various modifications and equivalent arrangements included within the spirit and scope of the appended claims.

## Claims

1. A method for optical communication, comprising:
determining (201), at an optical line terminal (110), a channel characteristic of a channel from an optical network unit (120) to the optical line terminal (110);
determining (202), based on the channel characteristic, a preamble property for a transmission from the optical network unit (120) to the optical line terminal (110), the preamble property at least partially compensating for transmission distortion caused by the channel characteristic;
transmitting (203), to the optical network unit (120), preamble information (210), the preamble information (210) being for generating a preamble having the preamble property; and
receiving (207), from the optical network unit (120), the preamble having the preamble property.

2. The method of claim 1, wherein transmitting (203) the preamble information comprises: a)
transmitting, to the optical network unit (120), a configuration parameter for generating the preamble, wherein the configuration parameter is determined based on the preamble property by the optical line terminal (110), and/or
wherein transmitting (203) the preamble information comprises: b)
transmitting, to the optical network unit (120), an indication indicating the preamble, wherein the preamble is determined based on the preamble property by the optical line terminal (110).

3. The method of claim 1, wherein determining (201) the channel characteristic comprises:
determining, based on information received from the optical network unit (120) at an activation stage of the optical network unit (120), the channel characteristic,
wherein for example the information comprises at least one of a serial number and a ranging result of the optical network unit (120),
wherein for example the method further comprises:
in response to determining that additional information of the optical network unit (120) is required to determine the channel characteristic, transmitting, to the optical network unit (120), a request for the additional information; and
receiving, from the optical network unit (120), the additional information,
wherein for example the additional information comprises at least one of a hardware version, a modulation format, a modulator bandwidth, and calibration data of the optical network unit (120).

4. The method of claim 3, wherein determining the preamble property comprises:
searching, based on the information received from the optical network unit, a memory for a corresponding stored preamble property; and
in response to finding the stored preamble property, determining the stored preamble property as the preamble property.

5. The method of claim 1, wherein a) the preamble property comprises at least one of a symbol transition probability and a spectral shaping configuration associated with the preamble, and/or wherein b) the method further comprises:
training, by using the preamble received, an equalizer of the optical line terminal (110), and/or wherein c)
the method further comprises:
transmitting, to the optical network unit (120), a first indication, to indicate the optical network unit (120) to transmit the preamble to the optical line terminal (110), wherein for example transmitting the first indication comprises:
in response to receiving, from the optical network unit (120), an acknowledgement of the preamble information, transmitting the first indication to the optical network unit (120),
wherein for example the preamble is a first preamble, and the method further comprises:
in response to completion of training of an equalizer of the optical line terminal (110) by using the preamble, transmitting, to the optical network unit, a second indication, to indicate the optical network unit to transmit a second preamble to the optical line terminal (110); and
receiving the second preamble from the optical network unit, a length of the second preamble being less than a length of the first preamble,
wherein for example the second preamble has the preamble property,
wherein for example:
the preamble information is transmitted by using a first downlink wavelength or a second downlink wavelength,
the first indication or the second indication is transmitted by using the second downlink wavelength, and
a transmission speed corresponding to the second downlink wavelength is greater than a transmission speed corresponding to the first downlink wavelength.

6. The method of any of claims 1-3, wherein the preamble is a non-pseudo random binary sequence.

7. A method for optical communication, comprising:
receiving, at an optical network unit (120) and from an optical line terminal (110), preamble information, the preamble information being for generating a preamble having a preamble property, the preamble property being determined based on a channel characteristic of a channel from the optical network unit (120) to the optical line terminal (110), the preamble property at least partially compensating for transmission distortion caused by the channel characteristic;
generating, based on the preamble information, the preamble for a transmission from the optical network unit to the optical line terminal (110); and
transmitting, to the optical line terminal (110), the preamble having the preamble property.

8. The method of claim 7, wherein a) the preamble information comprises a configuration parameter for generating the preamble, and/or
wherein b) generating the preamble based on the preamble information comprises:
determining, based on a filter coefficient as the configuration parameter, a filter for generating the preamble; and
filtering, by using the filter, an original preamble sequence, to generate the preamble.

9. The method of claim 7, wherein a) the preamble information comprises an indication indicating the preamble, and/or wherein b)
the method further comprises:
transmitting, to the optical line terminal (110), information for determining the channel characteristic,
wherein for example transmitting the information for determining the channel characteristic comprises:
transmitting, at an activation stage of the optical network unit (120) and to the optical line terminal, at least one of a serial number and a ranging result of the optical network unit (120),
wherein for example the method further comprises:
in response to receiving a request for the additional information from the optical line terminal (110), transmitting the additional information to the optical line terminal (110), the additional information being for determining the channel characteristic,
wherein for example the additional information comprises at least one of a hardware version, a modulation format, a modulator bandwidth, and calibration data of the optical network unit.

10. The method of claim 7, wherein a) the preamble property comprises at least one of a symbol transition probability and a spectral shaping configuration associated with the preamble, and/or
b) wherein transmitting the preamble to the optical line terminal (110) comprises:
in response to receiving, from the optical line terminal (110), a first indication to transmit the preamble, transmitting the preamble to the optical line terminal (110),
and/or wherein c) the method further comprises:
in response to receiving the preamble information from the optical line terminal (110), transmitting, to the optical line terminal (110), an acknowledgement of the preamble information,
and/or d) wherein the preamble is a first preamble, and the method further comprises:
in response to receiving, from the optical line terminal (110), a second indication to transmit a second preamble, transmitting the second preamble to the optical line terminal (110), a length of the second preamble being less than a length of the first preamble,
wherein for example the method further comprises:
generating, based on the preamble information, the second preamble.

11. The method of claim9, wherein:
the information for determining the channel characteristic is transmitted by using a first uplink wavelength;
the first preamble or the second preamble is transmitted by using a second uplink wavelength; and
a transmission speed corresponding to the second uplink wavelength is greater than a transmission speed corresponding to the first uplink wavelength.

12. The method of any of claims 7-11, wherein the preamble is a non-pseudo random binary sequence.

13. A device for optical communication, comprising:
a processor; and
a transceiver communicatively coupled to the processor;
the processor being configured to cause the device to perform the method of any of claims 1-6.

14. A device for optical communication, comprising:
a processor; and
a transceiver communicatively coupled to the processor;
the processor being configured to cause the device to perform the method of any of claims 7-12.

15. An apparatus for optical communication, comprising:
means for determining a channel characteristic of a channel from an optical network unit (120) to an optical line terminal (110);
means for determining, based on the channel characteristic, a preamble property for a transmission from the optical network unit (120) to the optical line terminal (110), the preamble property at least partially compensating for transmission distortion caused by the channel characteristic;
means for transmitting, to the optical network unit (120), preamble information, the preamble information being for generating a preamble having the preamble property; and
means for receiving, from the optical network unit (120), the preamble having the preamble property.

16. An apparatus for optical communication, comprising:
means for receiving, from an optical line terminal (110), preamble information, the preamble information being for generating a preamble having a preamble property, the preamble property being determined based on a channel characteristic of a channel from an optical network unit (120) to the optical line terminal, the preamble property at least partially compensating for transmission distortion caused by the channel characteristic;
means for generating, based on the preamble information, the preamble for a transmission from the optical network unit (120) to the optical line terminal (110); and
means for transmitting, to the optical line terminal (110), the preamble having the preamble property.

17. A computer readable medium, storing instructions thereon, the instructions, when executed by at least one processing unit, causing the at least one processing unit to be configured to perform the method according to any of claims 1-6.

18. A computer readable medium, storing instructions thereon, the instructions, when executed by at least one processing unit, causing the at least one processing unit to be configured to perform the method according to any of claims 7-12.
